# EUROPÄISCHE PATENTSCHRIFT

(11) **EP 0 898 114 B1**
(45) Veröffentlichungstag und Bekanntmachung des Hinweises auf die Patenterteilung: **31.10.2007**
(21) Anmeldenummer: 98113770.6
(22) Anmeldetag: 23.07.1998
(51) Int. Cl.: F21S 8/10, F21V 17/02, F21V 23/00

(54) **Beleuchtungseinrichtung für Fahrzeuge**
Lighting device for vehicles
Dispositif d'éclairage pour véhicules

(30) Priorität: 22.08.1997 DE 19736518; 22.05.1998 DE 19822895
(43) Veröffentlichungstag der Anmeldung: 24.02.1999
(73) Patentinhaber: Automotive Lighting Reutlingen GmbH, 72762 Reutlingen (DE)
(72) Erfinder: Dobler, Karl-Otto, 72768 Reutlingen (DE); Steinert, Guenter, 72770 Reutlingen (DE)
(74) Vertreter: Dreiss, Fuhlendorf, Steimle & Becker

(56) Entgegenhaltungen:
- DE-A- 4 418 399
- DE-A- 19 508 471
- DE-A- 19 625 879
- FR-A- 2 704 938

## Beschreibung

### Stand der Technik

Die Erfindung geht aus von einer Beleuchtungseinrichtung für Fahrzeuge nach der Gattung des Anspruchs 1.

Eine solche Beleuchtungseinrichtung ist durch die DE 44 18 399 A1 bekannt. Diese Beleuchtungseinrichtung weist wenigstens eine Lichtquelle auf, für die eine Aufnahme vorgesehen ist, in die die Lichtquelle einsetzbar ist und die an einem Gehäuse der Beleuchtungseinrichtung befestigbar ist. Die Aufnahme weist wenigstens ein elektrisches Kontaktelement auf, mit dem wenigstens ein Kontaktelement der Lichtquelle bei deren Einsetzen in die Aufnahme zusammenfügbar ist. Am Gehäuse der Beleuchtungseinrichtung ist wenigstens ein elektrisches Anschlußelement angeordnet, das mit einem am Gehäuse angeordneten Steckerteil über eine innerhalb des Gehäuses verlaufenden Leitung verbunden ist. Bei der Befestigung der Aufnahme in einer Öffnung des Gehäuses gelangt deren Kontaktelement in Anlage am Anschlußelement am Gehäuse, so daß die elektrische Kontaktierung der Lichtquelle hergestellt wird. Im Gehäuse der Beleuchtungseinrichtung ist ein Reflektor angeordnet, der eine Öffnung aufweist, in die die Lichtquelle bei der Montage der Aufnahme eingeführt wird. Nachteilig bei dieser Ausführung der Beleuchtungseinrichtung ist, daß durch die Befestigung der Aufnahme am Gehäuse die Lichtquelle bedingt durch die Fertigungstoleranzen des Gehäuses unter Umständen nicht die erforderliche Lage bezüglich des Reflektors einnimmt und somit das durch den Reflektor reflektierte Lichtbündel nicht die erforderliche Richtung aufweist. Darüberhinaus ist durch die Befestigung der Aufnahme am Gehäuse keine Verstellung des Reflektors im Gehäuse möglich, wie sie jedoch für Scheinwerfer vorgeschrieben ist.

### Vorteile der Erfindung

Die erfindungsgemäße Beleuchtungseinrichtung für Fahrzeuge mit den Merkmalen gemäß Anspruch 1 hat demgegenüber den Vorteil, daß durch die Befestigung der Aufnahme zumindest mittelbar am Reflektor die Lichtquelle am Reflektor genau positioniert wird. Außerdem ist durch das flexible Verschlußelement eine Abdichtung der Öffnung des Gehäuses und zugleich eine Verstellbarkeit des Reflektors im Gehäuse ermöglicht, wobei die Lageänderung des Reflektors zum Gehäuse durch das flexible Verschlußelement ermöglicht wird.

In den abhängigen Ansprüchen sind vorteilhafte Ausgestaltungen und Weiterbildungen der erfindungsgemäßen Beleuchtungseinrichtung angegeben. Durch die Ausbildung gemäß Anspruch 2 braucht das Verschlußelement zur Montage und Demontage der Aufnahme nicht gelöst zu werden. Die Ausbildung gemäß Anspruch 4 ermöglicht eine einfache Herstellung des Reflektors. Durch die Ausbildung gemäß Anspruch 5 kann das Verschlußelement auf einfache Weise am Hals des Reflektors angeordnet werden. Die Ausbildung gemäß Anspruch 6 ermöglicht eine Befestigung des wenigstens einen Anschlußelements am Hals des Reflektors ohne zusätzliche Befestigungselemente. Durch die Ausbildung gemäß Anspruch 8 wird erreicht, daß die Lichtquelle unter Vorspannung in Anlage an der Auflagefläche am Reflektor gehalten wird. Die Ausbildung gemäß Anspruch 9 ermöglicht eine einfache Fixierung des Verschlußelements am Hals des Reflektors.

Durch die Ausbildung gemäß Anspruch 10 ist eine sichere Abdichtung der Öffnung des Reflektors erreicht. Durch die Ausbildung gemäß Anspruch 11 wird die Lichtquelle nicht nur in der Aufnahme elektrisch kontakiert sondern auch in dieser gehalten. Die Ausbildung gemäß Anspruch 12 ermöglicht eine sichere Kontaktierung mit geringem elektrischem Widerstand.

### Zeichnung

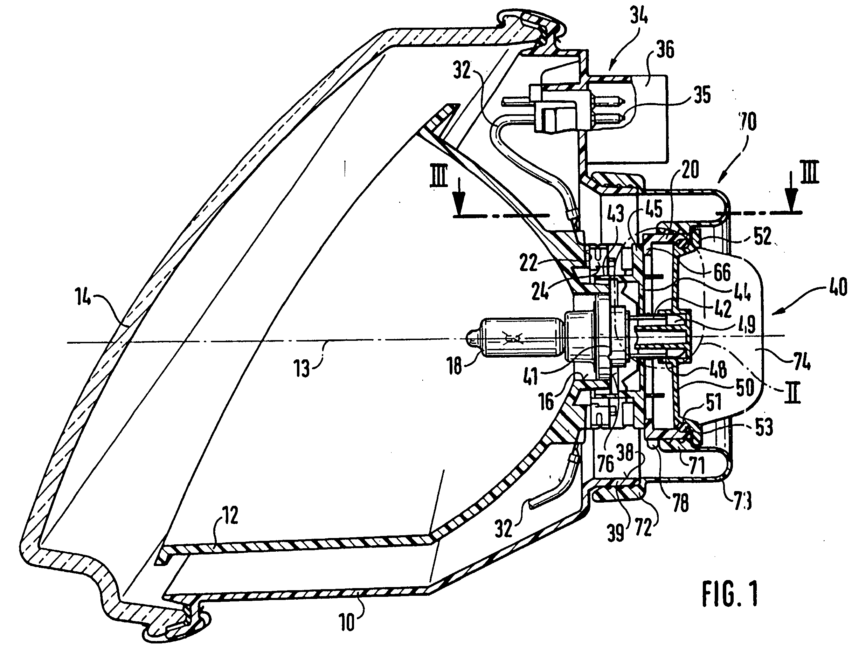

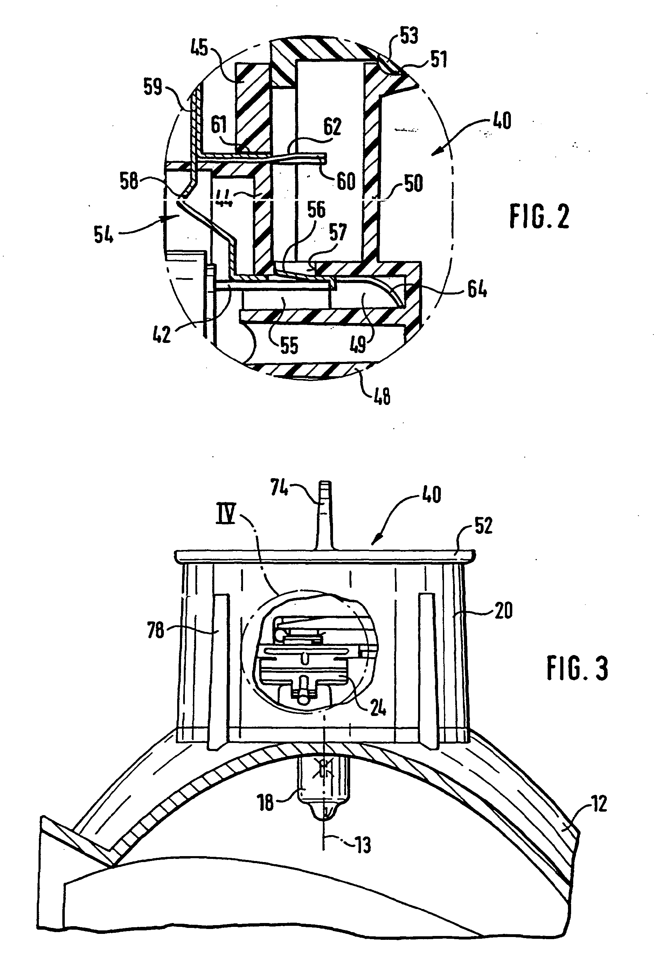

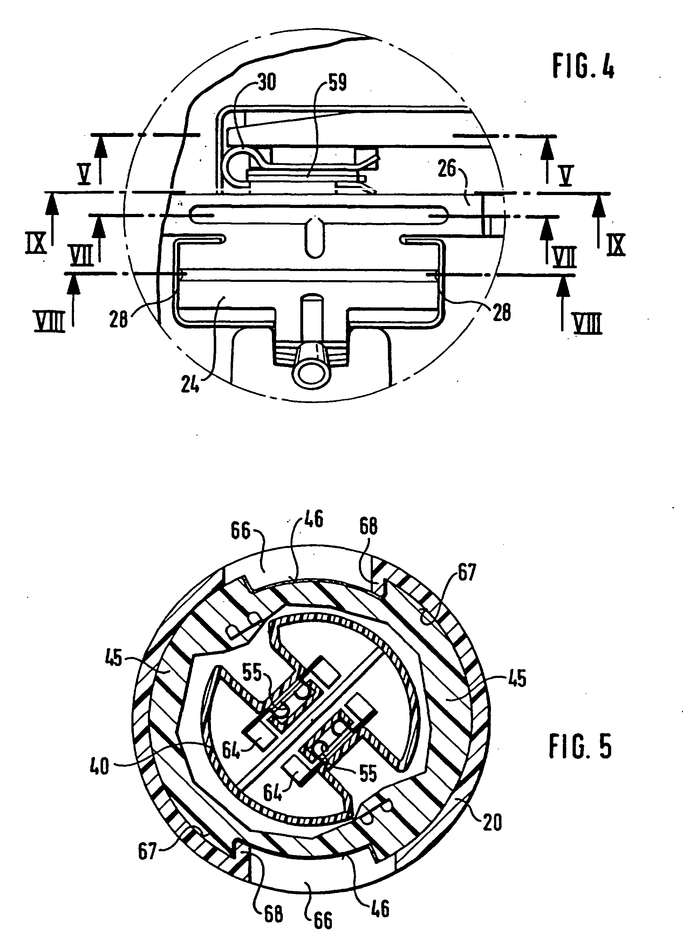

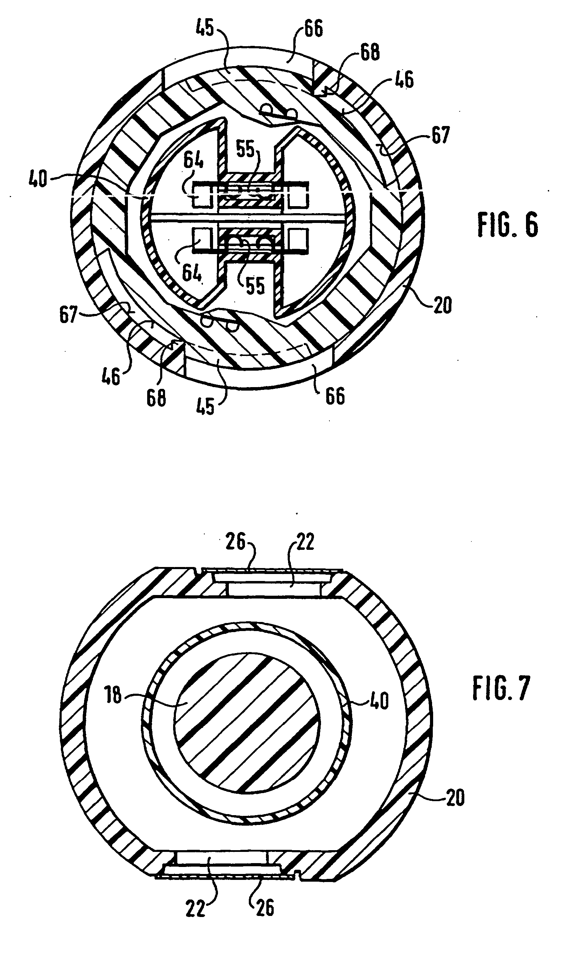

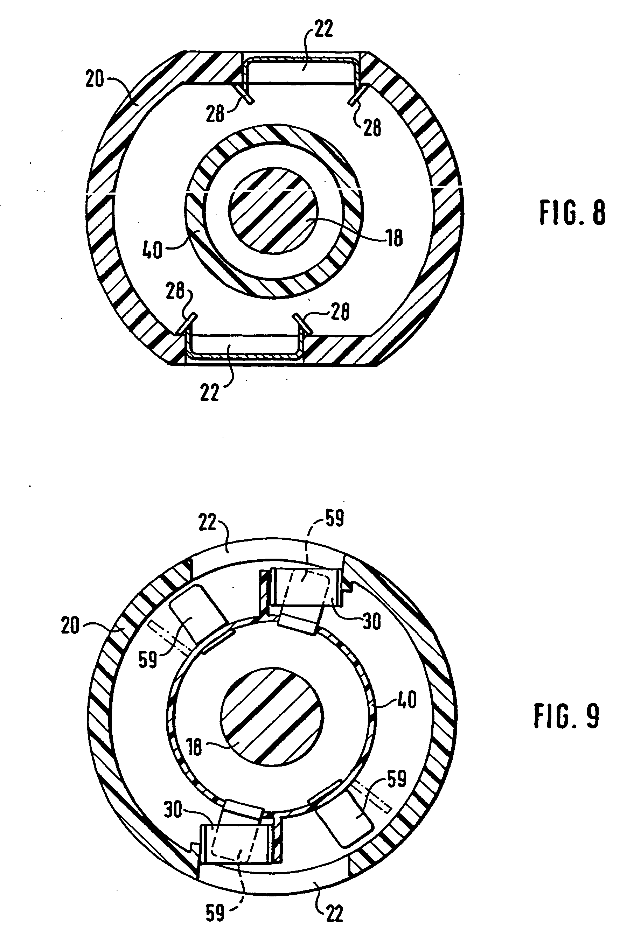

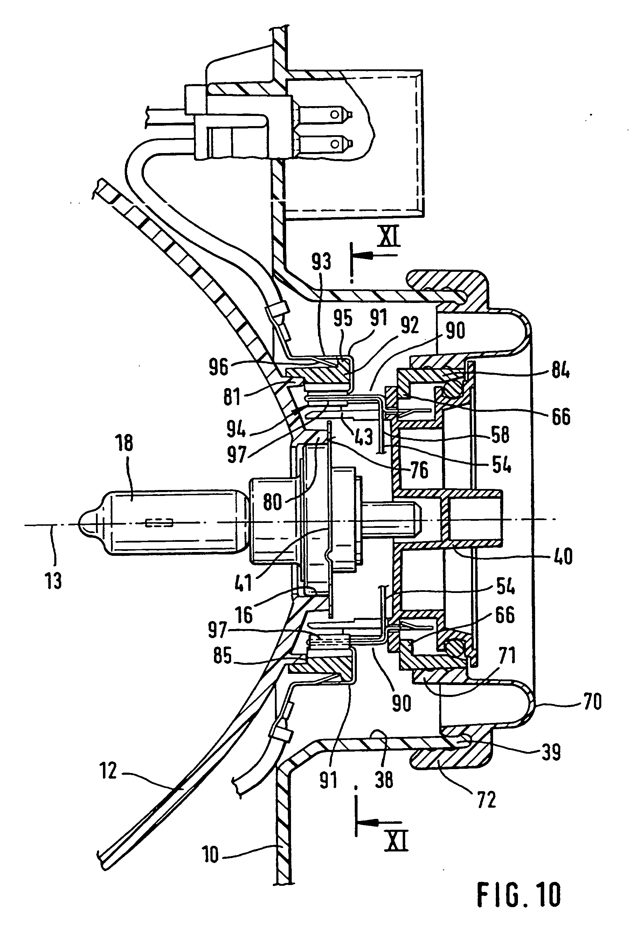

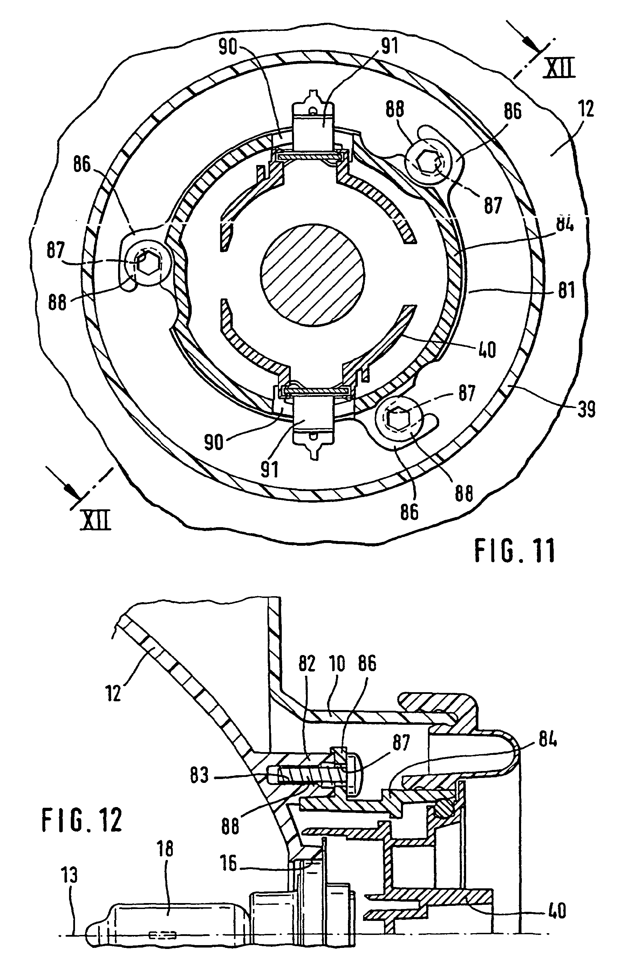

Zwei Ausführungsbeispiele der Erfindung sind in der Zeichnung dargestellt und in der nachfolgenden Beschreibung näher erläutert. Es zeigen Figur 1 eine Beleuchtungseinrichtung in Form eines Scheinwerfers in einem vertikalen Längsschnitt gemäß einem ersten Ausführungsbeispiel, Figur 2 einen in Figur 1 mit II bezeichneten Ausschnitt einer Aufnahme für eine Lichtquelle des Scheinwerfers in vergrößerter Darstellung, Figur 3 den Scheinwerfer gemäß dem ersten Ausführungsbeispiel ausschnittsweise in einem Schnitt entlang Linie III-III in Figur 1, Figur 4 einen in Figur 3 mit IV bezeichneten Ausschnitt in vergrößerter Darstellung, Figur 5 den Scheinwerfer gemäß dem ersten Ausführungsbeispiel in einem Querschnitt entlang Linie V-V in Figur 4 mit der Aufnahme in einer Montagestellung, Figur 6 denselben Schnitt mit der Aufnahme in einer Verriegelungsstellung, Figur 7 den Scheinwerfer gemäß dem ersten Ausführungsbeispiel in einem Querschnitt entlang Linie VII-VII in Figur 4, Figur 8 den Scheinwerfer gemäß dem ersten Ausführungsbeispiel in einem Querschnitt entlang Linie VIII-VIII in Figur 4, Figur 9 den Scheinwerfer gemäß dem ersten Ausführungsbeispiel in einem Querschnitt entlang Linien IX-IX in Figur 4, Figur 10 den Scheinwerfer gemäß einem zweiten Ausführungsbeispiel in einem vertikalen Längsschnitt, Figur 11 den Scheinwerfer gemäß dem zweiten Ausführungsbeispiel in einem Querschnitt entlang Linie XI-XI in Figur 10 und Figur 12 den Scheinwerfer gemäß dem zweiten Ausführungsbeispiel ausschnittsweise in einem Längsschnitt entlang Linie XII-XII in Figur 11.

### Beschreibung der Ausführungsbeispiele

Eine in den Figuren 1 bis 9 gemäß einem ersten Ausführungsbeispiel dargestellte Beleuchtungseinrichtung für Fahrzeuge, insbesondere Kraftfahrzeuge, ist als Scheinwerfer ausgebildet. Der Scheinwerfer weist ein vorzugsweise aus Kunststoff bestehendes Gehäuse 10 auf, in dem wenigstens ein Reflektor 12 angeordnet ist und dessen Lichtaustrittsöffnung mit einer lichtdurchlässigen Scheibe 14 abgedeckt ist. Der Reflektor 12 ist konkav gekrümmt und weist in seinem Scheitelbereich eine Öffnung 16 auf, durch die eine Lichtquelle 18 einführbar ist. Die Öffnung 16 zumindest auf einem Teil ihres Umfangs umgebend steht von der Rückseite des Reflektors 12 einstückig mit diesem ein Hals 20 nach hinten ab. Der Hals 20 verläuft zumindest annähernd koaxial zur optischen Achse 13 des Reflektors 12. Der Reflektor 12 besteht vorzugsweise aus Kunststoff, so daß der Hals 20 bei der Herstellung des Reflektors 12 durch Spritzgießen auf einfache Weise an diesem angeformt werden kann. Der Hals 20 des Reflektors 12 weist an seinem Umfang zwei Aussparungen 22 auf, die beispielsweise zumindest annähernd einander diametral gegenüberliegend angeordnet sind. Die Aussparungen 22 sind allseitig durch den Hals 20 begrenzt. In jede Aussparung 22 ist jeweils ein elektrisches Anschlußelement 24 eingesetzt und in der Aussparung 22 kraft- und/oder formschlüssig gehalten. Die Anschlußelemente 24 weisen wie in Figur 4 und Figur 7 dargestellt jeweils einen Federsteg 26 auf, die in den Aussparungen 22 in Umfangsrichtung des Halses 20 unter federnder Zusammendrückung angeordnet sind und somit die Anschlußelemente 24 kraftschlüssig in den Aussparungen 22 fixieren. Außerdem weisen die Anschlußelemente 24 wie in Figur 4 und Figur 8 dargestellt in einem gegenüber den Federstegen 26 näher am Reflektor 12 angeordneten Bereich jeweils aus diesen ausgestellte Beißkanten 28 auf, die sich an den Rändern der Aussparungen 22 verkrallen und damit die Anschlußelemente 24 formschlüssig in den Aussparungen 22 fixieren. Die Anschlußelemente 24 bestehen vorzugsweise aus gebogenem Blech.

Die Anschlußelemente 24 weisen an ihren vom Reflektor 12 wegweisenden Endbereichen außerdem jeweils einen u-förmig ausgebildeten Abschnitt 30 auf, der jeweils eine Flachsteckhülse bildet, wobei diese mit ihren offenen Seiten in Umfangsrichtung des Halses 20 weisen und deren Schenkel in zur optischen Achse 13 zumindest annähernd senkrechten Ebenen verlaufen. Mit den Anschlußelementen 24 ist jeweils eine innerhalb des Gehäuses 10 verlaufende elektrische Leitung 32 in Form eines Kabels verbunden, die zu einem am Gehäuse 10 angeordneten Steckerteil 34 führen. Das Steckerteil 34 weist nach außen aus dem Gehäuse 10 ragende Kontaktstifte 35 auf, die von einem Flansch 36 umgeben sind, der vorzugsweise einstückig am Gehäuse 10 angeformt ist und mit dem ein nicht dargestelltes Steckerteil zusammenfügbar ist, das an zum Bordnetz des Fahrzeugs führenden elektrischen Leitungen angeschlossen ist.

Das Gehäuse 10 weist an seiner Rückseite eine Öffnung 38 auf, durch die der Hals 20 des Reflektors 12 mit seinem Endbereich hindurchragt. Die Öffnung 38 ist zumindest annähernd koaxial zum Reflektorhals 20 angeordnet und von einem vom Gehäuse 10 nach außen abstehenden Hals 39 umgeben. Am Reflektorhals 20 ist eine Aufnahme 40 für die Lichtquelle 18 befestigbar, in der die Lichtquelle 18 vormontiert wird. Die Lichtquelle 18 kann eine Gasentladungslampe sein oder wie beim dargestellten Ausführungsbeispiel eine Glühlampe, die einen Sockel aufweist, von dem ein Teller 41 radial nach außen absteht und aus dem ein oder wie dargestellt zwei elektrische Kontaktstifte 42 axial herausragen.

Die Aufnahme 40 weist einen insbesondere aus Kunststoff bestehenden Grundkörper auf, der an seinem vorderen, zum Reflektor 12 weisenden Endbereich einen Zentrierungsabschnitt 43 aufweist, in dem die Lichtquelle 18 über ihren Sockelteller 41 zentriert wird. An den Zentrierungsabschnitt 43 schließt sich vom Reflektor 12 weg ein Befestigungsabschnitt 44 mit beispielsweise zwei radial nach außen abstehenden Rippen 45, die sich jeweils über weniger als den halben Umfang der Aufnahme 40 erstrecken und zumindest annähernd kreisbogenförmig verlaufen. Zwischen den Rippen 45 sind zwei Umfangsbereiche 46 mit geringerer radialer Erstreckung als die Rippen 45 angeordnet, die ebenfalls zumindest annähernd kreisbogenförmig ausgebildet sind und über den restlichen Umfang der Aufnahme 40 verlaufen.

An den Befestigungsabschnitt 44 schließt sich wiederum vom Reflektor 12 weg ein Zentralabschnitt 48 an, in dem zwei im querschnitt etwa rechteckförmige Vertiefungen 49 gebildet sind. An den Zentralabschnitt 48 schließt sich schließlich vom Reflektor 12 weg ein radial nach außen abstehender Bund 50 an, in dem eine umlaufende Ringnut 51 ausgebildet ist und an dessen vom Reflektor 12 wegweisendem Endbereich ein nochmals radial nach außen überstehender Flansch 52 ausgebildet ist. In die Ringnut 51 ist ein elastischer Dichtring 53 beispielsweise in Form eines O-Rings eingelegt. An der Aufnahme 40 sind zwei Kontaktelemente 54 gehalten, die jeweils eine in einer Vertiefung 49 angeordnete Flachsteckhülse 55 aufweisen, die in der Vertiefung 49 durch einen aus diesen ausgestellten Rasthaken 56 gesichert sind, wobei die Rasthaken 56 in jeweils eine seitliche Öffnung 57 im Zentralabschnitt 48 eingreifen und somit die Flachsteckhülsen 55 gegen Herausziehen sichern.

Die Kontaktelemente 54 weisen außerdem von deren Flachsteckhülsen 55 außerhalb der Vertiefungen 49 radial nach außen abstehende Verbindungsabschnitte 58 auf, die insbesondere wie in den Figuren 1 und 2 dargestellt v-förmig gebogen ausgebildet sind und an deren radial nach außen weisenden Endbereichen jeweils ein Flachsteckstift 59 ausgebildet ist. Radial innerhalb der Flachsteckstifte 59 steht von den Verbindungsabschnitten 58 jeweils vom Reflektor 12 weg in axialer Richtung ein Flachsteckstift 60 ab, der durch einen Schlitz 61 oder eine Nut des Befestigungsabschnitts 44 radial innerhalb der Rippen 45 hindurchtritt und durch einen aus diesem ausgestellten Rasthaken 62 gesichert ist. Die Flachsteckstifte 59 sind derart angeordnet, daß diese in radialer Richtung höchstens soweit oder weniger weit hinausragen wie die Rippen 45 und von den Rippen 45 in Umfangsrichtung überdeckt werden. Vorzugsweise sind die beiden Kontaktelemente 54 identisch ausgebildet und symmetrisch an der Aufnahme 40 angeordnet. Weiterhin bestehen die Kontaktelemente 54 vorzugsweise aus gestanztem und gebogenem Blech.

Zwischen den Böden der Vertiefungen 49 und den Enden der Flachsteckhülsen 55 ist jeweils ein federndes Element 64 angeordnet, das beispielsweise wie in Figur 2 und Figur 5 dargestellt als eine Blattfeder aus Blech oder Kunststoff ausgebildet sein kann. Die Kontaktelemente 54 sind dabei in Richtung der optischen Achse 13 in die Aufnahme 40 hineinverschiebbar, wobei über deren Flachsteckhülsen 55 die Blattfedern 64 gespannt werden und eine Vorspannung in Richtung der optischen Achse 13 erhalten.

Der Reflektorhals 20 weist einen zumindest annähernd kreisrunden Querschnitt auf, wobei an diesem an den vom Reflektor 12 wegweisenden Rändern der Aussparungen zwei radial nach innen ragende, sich jeweils über weniger als den halben Umfang erstreckende Rippen 66 ausgebildet sind, zwischen denen zwei Umfangsbereiche 67 mit größerem Innenquerschnitt ausgebildet sind. Jede Rippe 66 weist an einem in Umfangsrichtung weisenden Endbereich einen radial noch weiter nach innen ragenden Vorsprung 68 auf. Der zwischen dem Reflektorhals 20 und der Öffnung 38 des Gehäuses 10 verbleibende Bereich ist mittels eines Verschlußelements 70 verschlossen, das aus flexiblem Material wie beispielsweise Gummi besteht. Das Verschlußelement 70 weist einen inneren Flansch 71 auf, mit dem es auf den Außenumfang des Reflektorhalses 20 aufgeschoben ist, und einen äußeren Flansch 72, mit dem es auf den Hals 39 am Gehäuse 10 aufgeschoben ist. In dem Bereich zwischen seinen Flanschen 71,72 kann das Verschlußelement 70 beispielsweise wie in Figur 1 dargestellt einen u-förmigen Wulst 73 aufweisen. Durch das flexible Verschlußelement 70 ist eine Bewegung des Reflektors 12 relativ zum Gehäuse 10 ermöglicht, wie sie zu einer Einstellung des Reflektors 12 im Gehäuse 10 zur Ausrichtung des durch diesen reflektierten Lichtbündels erforderlich ist. Die Aufnahme 40 weist einen an deren Bund 50 und Flansch 52 angeformten, vom Reflektor 12 weg nach außen abstehenden Steg 74 auf, der etwa senkrecht zum Bund 50 und radial verläuft.

Nachfolgend wird die Montage der Lichtquelle 18 in der Aufnahme 40 und deren Montage am Reflektorhals 20 erläutert. Die Lichtquelle 18 wird mit ihrem Sockel in die Aufnahme 40 eingeführt, wobei deren Flachsteckstifte 42 in die Flachsteckhülsen 55 eintreten und deren Sockelteller 41 im Zentrierungsabschnitt 43 aufgenommen und zentriert wird. Die Lichtquelle 18 ist damit in der Aufnahme 40 gehalten und elektrisch mit den Kontaktelementen 54 verbunden.

Die Aufnahme 40 mit der darin angeordneten Lichtquelle 18 wird von der Rückseite des Scheinwerfers her mit dem Glaskolben der Lichtquelle 18 voraus in Richtung der optischen Achse 13 in den Reflektorhals 20 eingeführt. An der Aufnahme 40 kann dabei an deren Steg 74 angegriffen werden. Die Aufnahme 40 muß sich zunächst in einer in Figur 5 dargestellten Drehstellung befinden, in der deren Rippen 45 zu den Rippen 66 des Reflektorhalses 20 in Umfangsrichtung versetzt angeordnet sind, so daß die Rippen 45 der Aufnahme 40 durch die Umfangsbereiche 67 des Reflektorhalses 20 hindurchtreten können und entsprechend die Rippen 66 des Reflektorhalses 20 durch die Umfangsbereiche 46 der Aufnahme 40 hindurchtreten können. Die Aufnahme 40 wird in Richtung der optischen Achse 13 so weit eingeschoben, bis die Lichtquelle 18 mit ihrem Sockelteller 41 an einer innerhalb des Reflektorhalses 20 angeordneten Auflagefläche 76 am Reflektor 12 zur Anlage kommt und somit bezüglich dem Reflektor 12 in Richtung der optischen Achse 13 die vorgesehene Lage einnimmt. Die Lichtquelle 18 tritt mit ihrem Sockel in die Öffnung 16 im Scheitel des Reflektors 12 ein und wird dabei in radialer Richtung bezüglich der optischen Achse 13 ausgerichtet. Über diese Stellung hinaus muß die Aufnahme 40 noch weiter in Richtung der optischen Achse 13 eingeschoben werden, wobei die Kontaktelemente 54 in der Aufnahme 40 verschoben werden und die Blattfedern 64 wie vorstehend angegeben vorgespannt werden. Nach einem bestimmten Einschubweg in Richtung der optischen Achse 13 sind die Rippen 45 der Aufnahme 40 näher am Reflektor 12 angeordnet als die Rippen 66 des Reflektorhalses 20, so daß die Aufnahme 40 im Uhrzeigersinn ausgehend von ihrer in Figur 5 dargestellten Stellung in ihre in Figur 6 dargestellte Verriegelungsstellung verdreht werden kann. Dabei gelangen die Rippen 45 der Aufnahme 40 über die Rippen 66 des Reflektorhalses 20, so daß die Aufnahme 40 nicht mehr in Richtung der optischen Achse 13 vom Reflektorhals 20 abgezogen werden kann. Die Aufnahme 40 wird in Verriegelungsrichtung gedreht bis die in Verriegelungsrichtung weisenden Ränder der Rippen 45 an den Vorsprüngen 68 des Reflektorhalses 20 anliegen und die Aufnahme 40 somit nicht mehr weiter verdreht werden kann. Die Rippen 45 und Umfangsbereiche 46 der Aufnahme 40 sowie die Rippen 66 und Umfangsbereiche 67 des Reflektorhalses 20 bilden zusammen einen Bajonettverschluss zur Befestigung der Aufnahme 40 am Reflektorhals 20. Es könnten dabei auch mehr als zwei Rippen 45 an der Aufnahme 40 und Rippen 66 am Reflektorhals 20 vorgesehen sein.

In der Drehstellung, in der die Aufnahme 40 in Richtung der optischen Achse 13 in den Reflektorhals 20 eingeschoben wird, sind die Flachsteckstifte 59 der in der Aufnahme 40 angeordneten Kontaktelemente 54 in Umfangsrichtung zu den Anschlußelementen 24 versetzt angeordnet wie dies in Figur 9 mit durchgezogenen Linien dargestellt ist. Beim Drehen der Aufnahme 40 in deren Verriegelungsrichtung werden die Flachsteckstifte 59 der Kontaktelemente 54 in die u-förmigen Abschnitte 30 der Anschlußelemente 24 eingeführt wie dies in Figur 9 mit gestrichelten Linien dargestellt ist. Durch das Eintreten der Flachsteckstifte 59 in die Flachsteckhülsen bildenden u-förmigen Abschnitte 30, die sich dabei federnd aufweiten, wird eine sichere und widerstandsarme elektrische Verbindung der Lichtquelle 18 über die Kontaktelemente 54 mit den Anschlußelementen 24 hergestellt. Die Anordnung der u-förmigen Abschnitte 30 als Flachsteckhülsen und der Flachsteckstifte 59 kann auch umgekehrt sein, wobei dann die u-förmigen Abschnitte 30 als Flachsteckhülsen anstelle der Flachsteckstifte 59 an den Kontaktelementen 54 angeordnet sind und entsprechend die Flachsteckstifte 59 anstelle der u-förmigen Abschnitte 30 an den Anschlußelementen 24 angeordnet sind.

Der innere Flansch 71 des Verschlußelements 70 wird durch einen oder mehrere vom Reflektorhals 20 nach außen abstehende Nasen 78 und den Flansch 52 der Aufnahme 40 auf dem Reflektorhals 20 gesichert, so daß er nicht von diesem herunterrutschen kann. Die Aufnahme 40 taucht mit ihrem Bund 50 in den Endbereich des Reflektorhalses 20 ein und dichtet den Reflektorhals 20 und die Öffnung 16 des Reflektors 12 durch den Dichtring 53 ab. Zur Montage und Demontage der Aufnahme 40 braucht das Verschlußelement 70 nicht entfernt zu werden, da dieses nicht an der Aufnahme 40 angeordnet ist sondern am Reflektorhals 20. Zur Demontage der Aufnahme 40 wird diese entgegen dem Uhrzeigersinn verdreht in ihre in Figur 5 dargestellte Drehstellung und kann dann in Richtung der optischen Achse 13 aus dem Reflektorhals 20 herausgezogen werden.

In den Figuren 10 bis 12 ist die Beleuchtungseinrichtung wiederum in Form eines Scheinwerfers gemäß einem zweiten Ausführungsbeispiel dargestellt. Der grundsätzliche Aufbau des Scheinwerfers ist dabei gleich wie beim ersten Ausführungsbeispiel und nachfolgend werden im wesentlichen nur die abweichenden Ausbildungen des Scheinwerfers gemäß dem zweiten Ausführungsbeispiel beschrieben. Der Reflektor 12 weist wie in Figur 10 dargestellt in seinem Scheitelbereich die Öffnung 16 für die Lichtquelle 18 auf. Die Öffnung 16 zumindest auf einem Teil ihres Umfangs umgebend steht von der Rückseite des Reflektors 12 ein Ansatz 80 ab, dessen Stirnseite die Auflagefläche 76 für den Sockelteller 41 der Lichtquelle 18 bildet. Mit radialem Abstand zur Öffnung 16 und zum Ansatz 80 steht von der Rückseite des Reflektors 12 außerdem ein die Öffnung 16 zumindest auf einem Teil ihres Umfangs umgebender Kragen 81 ab. Der Kragen 81 weist wie in den Figuren 11 und 12 dargestellt über seinen Umfang verteilt mehrere Dome 82 auf, wobei beispielsweise drei Dome 82 gleichmäßig verteilt angeordnet sind. Es können jedoch auch weniger oder mehr als drei Dome 82 vorgesehen werden. Die Dome 82 weisen in ihren vom Reflektor 12 wegweisenden Stirnseiten jeweils eine Bohrung 83 auf.

Mit dem Reflektor 12 ist ein Halsteil 84 verbunden, das den Hals 20 des Reflektors 12 gemäß dem ersten Ausführungsbeispiel ersetzt und vorzugsweise wie der Reflektor 12 aus Kunststoff besteht und durch Spritzgießen hergestellt ist. Der Hals 84 weist an seinem vorderen, dem Reflektor 12 zugewandten Endbereich in seinem Innenumfang eine Querschnittserweiterung auf, durch die im Hals 84 eine ringförmige Schulter 85 gebildet ist, die am Stirnende des Kragens 81 des Reflektors 12 zur Anlage kommt, wobei der Endbereich des Halses 84 den Kragen 81 übergreift. Vom Endbereich des Halses 84 stehen entsprechend der Anzahl und Anordnung der Dome 82 des Reflektors 12 drei Nasen 86 radial nach außen ab. Die Nasen 86 weisen jeweils eine Öffnung 87 auf, die in Umfangsrichtung des Halses 84 auf einer Seite offen sein können. Der Hals 84 ist mittels durch die Öffnungen 87 seiner Nasen 86 gesteckter und in die Bohrungen 83 der Dome 82 eingedrehter Schrauben 88 am Reflektor 12 befestigt. Die Schrauben 88 können bereits vor der Montage des Halses 84 in die Bohrungen 83 der Dome 82 eingedreht werden, wobei dann nachfolgend der Hals 84 mit seinen Nasen 86 zu den Domen 82 in Umfangsrichtung versetzt auf den Kragen 81 des Reflektors 12 aufgeschoben wird und anschließend durch Verdrehen des Halses 84 die Schrauben 88 in die Öffnungen 87 der Nasen 86 durch deren offene Umfangsseiten gelangen und schließlich die Schrauben 88 festgezogen werden können.

Der Hals 84 weist in einem mittleren Abschnitt in seinem Umfang zwei Aussparungen 90 auf, die beispielsweise zumindest annähernd einander diametral gegenüberliegend angeordnet sind und die beispielsweise etwa rechteckförmig ausgebildet sind. In den Aussparungen 90 ist jeweils ein elektrisches Anschlußelement 91 angeordnet, das eine u-förmige Grundgestalt besitzt, wobei dieses über den die Aussparung 90 zum Reflektor 12 hin begrenzenden Rand 92 des Halses 84 gesteckt ist, so daß dessen Schenkel 93, 94 den Rand 92 übergreifen und mit ihren freien Enden zum Reflektor 12 hinweisen. Der Rand 92 kann einen nach außen ragenden Vorsprung 95 aufweisen und aus dem am Außenumfang des Halses 84 angeordneten Schenkel 93 des Anschlußelements 91 kann ein nach innen abstehender federnder Rasthaken 96 ausgestellt sein, der hinter dem Vorsprung 95 einrastet, wodurch das Anschlußelement 91 formschlüssig am Hals 84 gehalten ist. An den am Außenumfang des Halses 84 angeordneten Schenkeln 93 der Anschlußelemente 91 sind die Leitungen 32 angeschlossen.

Die am Innenumfang des Halses 84 angeordneten Schenkel 94 der Anschlußelemente 91 sind wiederum u-förmig gebogen, so daß diese Flachsteckhülsen bilden, wobei diesen in Umfangsrichtung des Halses 84 offen sind und deren Schenkel etwa parallel zur optischen Achse 13 und tangential zu dieser verlaufen. An dem die Aussparungen 90 vom Reflektor 12 weg begrenzenden Rand des Halses 84 sind wie beim Hals 20 gemäß dem ersten Ausführungsbeispiel die sich über jeweils weniger als den halben Umfang des Halses 84 erstreckenden Rippen 66 ausgebildet, zwischen denen zwei Umfangsbereiche 67 ohne die Rippen 66 und mit größerem Innenquerschnitt ausgebildet sind. Das Gehäuse 10 weist an seiner Rückseite die Öffnung 38 auf, durrch die der Hals 84 mit seinem vom Reflektor 12 wegweisenden Endbereich hindurchragt.

Am Hals 84 ist die Aufnahme 40 für die Lichtquelle 18 bajonettverschlußartig befestigbar, die gleich wie beim ersten Ausführungsbeispiel ausgebildet ist. Die beiden an der Aufnahme 40 angeordneten Kontaktelemente 54 sind im wesentlichen wie beim ersten Ausführungsbeispiel ausgebildet und wie diese an der Aufnahme 40 gehalten. Abweichend vom ersten Ausführungsbeispiel sind die Flachsteckstifte 97 der Kontaktelemente 54 gemäß dem zweiten Ausführungsbeispiel nicht radial zur optischen Achse 13 angeordnet sondern etwa parallel zu dieser und verlaufen ausgehend von den Verbindungsabschnitten 58 zum Reflektor 12 hin mit radialem Abstand außerhalb des Zentrierungsabschnitts 43 der Aufnahme 40. Vorzugsweise sind auch hier beide Kontaktelemente 54 identisch ausgebildet und symmetrisch an der Aufnahme 40 angeordnet.

Zwischen dem Hals 84 und dem die Öffnung 38 des Gehäuses 10 umgebenden Hals 39 ist das Verschlußelement 70 aus flexiblem Material angeordnet, das gleich wie beim ersten Ausführungsbeispiel ausgebildet ist. Das Verschlußelement 70 ist mit seinem äußeren Flansch 72 auf den Hals 39 des Gehäuses 10 und mit seinem inneren Flansch 71 auf den Hals 84 aufgeschoben. Der wesentliche Unterschied des Scheinwerfers gemäß dem zweiten Ausführungsbeispiel zu dem gemäß dem ersten Ausführungsbeispiel ist der, daß die Anschlußelemente 91 nicht an dem am Reflektor 12 angeformten Hals 20 sondern an dem als separates Teil ausgebildeten und mit dem Reflektor 12 verbundenen Hals 84 angeordnet sind. Die Anschlußelemente 91 sind beim Scheinwerfer gemäß dem zweiten Ausführungsbeispiel über den am Reflektor 12 befestigten Hals 84 mittelbar am Reflektor 12 angeordnet. Das Verschlußelement 70 ist zwischen dem Gehäuse 10 und über den mit dem Reflektor 12 verbundenen Hals 84 mittelbar dem Reflektor 12 angeordnet.

Die Ausbildung der Anschlußelemente 91 mit den parallel zur optischen Achse 13 angeordneten und in Umfangsrichtung offenen Flachsteckhülsen von deren Schenkeln 94 sowie die zur optischen Achse 13 parallele Anordnung der Flachsteckstifte 97 der Kontaktelemente 54 der Aufnahme 40 können auch beim Scheinwerfer gemäß dem ersten Ausführungsbeispiel mit am Reflektor 12 direkt angeformtem Hals 20 vorgesehen werden. Alternativ können auch beim Scheinwerfer gemäß dem zweiten Ausführungsbeispiel die Anschlußelemente 91 wie beim ersten Ausführungsbeispiel in Ebenen senkrecht zur optischen Achse 13 angeordnete u-förmige Abschnitte 30 als Flachsteckhülsen und die Kontaktelemente 54 radial zur optischen Achse 13 angeordnete Flachsteckstifte 59 aufweisen. Die Ausbildung des Scheinwerfers gemäß dem zweiten Ausführungsbeispiel mit dem als separates Teil ausgebildeten Hals 84 bietet den Vorteil einer einfachen Herstellung des Reflektors 12.

## Patentansprüche

1. Beleuchtungseinrichtung für Fahrzeuge mit wenigstens einer Lichtquelle (18), die in eine Aufnahme (40) einsetzbar ist, welche an einem Teil (12) der Beleuchtungseinrichtung befestigbar ist und welche wenigstens ein elektrisches Kontaktelement (54) aufweist, mit dem wenigstens ein elektrisches Kontaktelement (42) der Lichtquelle (18) bei deren Einsetzen in die Aufnahme (40) in Anlage kommt, wobei die Beleuchtungseinrichtung wenigstens ein elektrisches Anschlußelement (24;91) aufweist, an dem das wenigstens eine Kontaktelement (54) der Aufnahme (40) bei deren Befestigung zur Anlage kommt und das mit einem an einem Gehäuse (10) der Beleuchtungseinrichtung angeordneten Anschlußeinrichtung (34) über wenigstens eine innerhalb des Gehäuses (10) verlaufende Leitereinrichtung (32) verbunden ist, und wobei das Gehäuse (10) wenigstens eine Öffnung (38) zum Einführen der Lichtquelle (18) aufweist und im Gehäuse (10) wenigstens ein Reflektor (12) mit einer Öffnung (16) angeordnet ist, durch die die Lichtquelle (18) einführbar ist, **dadurch gekennzeichnet, daß** das wenigstens eine Anschlußelement (24;91) zumindest mittelbar am Reflektor (12) angeordnet ist, daß die Aufnahme (40) zumindest mittelbar am Reflektor (12) befestigbar ist, daß der Reflektor (12) im Gehäuse (10) verstellbar angeordnet ist und daß die Öffnung (38) des Gehäuses (10) mittels eines flexiblen, zwischen zumindest mittelbar dem Reflektor (12) und dem Gehäuse (10) angeordneten Verschlußelements (70) abgedeckt ist.

2. Beleuchtungseinrichtung nach Anspruch 1, **dadurch gekennzeichnet, daß** die Aufnahme (40) bei angebrachtem Verschlußelement (70) zumindest mittelbar am Reflektor (12) befestigbar und lösbar ist.

3. Beleuchtungseinrichtung nach Anspruch 1 oder 2, **dadurch gekennzeichnet, daß** der Reflektor (12) einen dessen Öffnung (16) umgebenden, von dessen Rückseite zur Öffnung (38) des Gehäuses (10) hin abstehenden Hals (20) aufweist, in den die Aufnahme (40) einführbar ist und zwischen dem und dem Gehäuse (10) des Verschlußelement (70) angeordnet ist.

4. Beleuchtungseinrichtung nach Anspruch 1 oder 2, **dadurch gekennzeichnet, daß** mit dem Reflektor (12) ein dessen Öffnung (16) umgebender Hals (84) verbunden ist, in den die Aufnahme (40) einführbar ist und zwischen dem und dem Gehäuse (10) das Verschlußelement (70) angeordnet ist.

5. Beleuchtungseinrichtung nach Anspruch 3 oder 4, **dadurch gekennzeichnet, daß** der Hals (20;84) des Reflektors (12) in seinem Umfang wenigstens eine Aussparung (22;90) aufweist, in der das wenigstens eine Anschlußelement (24;91) angeordnet und gehalten ist.

6. Beleuchtungseinrichtung nach Anspruch 5, **dadurch gekennzeichnet, daß** das wenigstens eine Anschlußelement (24;91) in der wenigstens einen Aussparung (22;90) kraftschlüssig und/oder formschlüssig gehalten ist.

7. Beleuchtungseinrichtung nach einem der Ansprüche 3 bis 6, **dadurch gekennzeichnet, daß** die Aufnahme (40) bajonettverschlußartig am Hals (20;84) des Reflektors (12) befestigbar ist und dabei in einer ersten Drehstellung in den Hals (20;84) einführbar ist und anschließend in eine Verriegelungsstellung verdrehbar ist.

8. Beleuchtungseinrichtung nach Anspruch 7, **dadurch gekennzeichnet, daß** der Reflektor (12) eine Auflagefläche (76) aufweist, an der die Lichtquelle (18) in Einschubrichtung der Aufnahme (40) zur Anlage kommt, wobei zur Ermöglichung der Verdrehung der Aufnahme (40) in ihre Verriegelungsstellung die Aufnahme (40) über den Einschubweg, der zur Anlage der Lichtquelle (18) an der Auflagefläche (76) erforderlich ist, hinaus einschiebbar ist, wobei das wenigstens eine Kontaktelement (54) in der Aufnahme (40) verschoben und ein in der Aufnahme (40) angeordnetes federndes Element (64) vorgespannt wird.

9. Beleuchtungseinrichtung nach einem der Ansprüche 3 bis 8, **dadurch gekennzeichnet, daß** die Aufnahme (40) einen über den Außenumfang des Halses (20;84) des Reflektors (12) hinausragenden Flansch (52) und der Hals (20;84) des Reflektors (12) wenigstens einen aus dessen Außenumfang herausragenden Vorsprung (78) aufwiest, und daß das Verschlußelement (70) auf dem Hals (20;84) des Reflektors (12) zwischen dessen wenigstens einer Nase (78) und dem Flansch (52) der Aufnahme (40) fixiert ist.

10. Beleuchtungseinrichtung nach einem der Ansprüche 3 bis 9, **dadurch gekennzeichnet, daß** zwischen der Aufnahme (40) und dem Hals (20;84) des Reflektors (12) ein elastisches Dichtelement (53) eingespannt ist.

11. Beleuchtungseinrichtung nach einem der vorstehenden Ansprüche, **dadurch gekennzeichnet, daß** das wenigstens eine elektrische Kontaktelement (54) der Aufnahme (40) eine Steckhülse (55) aufweist, in die das als Steckstift ausgebildete wenigstens eine Kontaktelement (42) der Lichtquelle (18) einführbar ist.

12. Beleuchtungseinrichtung nach einem der vorstehenden Ansprüche, **dadurch gekennzeichnet, daß** das wenigstens eine Anschlußelement (24;91) einen u-förmig ausgebildeten Abschnitt (30;94) aufweist, in den ein als Steckstift (59;97) ausgebildeter Teil des wenigstens einen Kontaktelements (54) der Aufnahme (40) einführbar ist.

## Claims

1. A lighting device for vehicles, having at least one light source (18), which can be inserted into a receptacle (40) which can be fastened on an element (12) of the lighting device and has at least one electrical contact element (54) with which an electrical contact element (42) of the light source (18) comes into engagement in the course of its insertion, wherein the lighting device has at least one electrical connecting element (24, 51), with which the at least one contact element (54) of the receptacle comes into contact when it is fastened, and which is connected via at least one conductor arrangement (32) extending inside the housing (10) with a connecting arrangement (34) disposed on a housing (10) of the lighting device, and wherein the housing (10) has at least one opening (38) for introducing the light source (18), and at least one reflector (12) with an opening (16) is disposed in the housing (10), through which the light source (18) can be inserted, **characterized in that** the at least one connecting element (24, 51) is arranged, at least indirectly, on the reflector (12), that the receptacle (40) can be fastened, at least indirectly, to the reflector (12), that the reflector (12) can be adjustably arranged in the housing (10), and that the opening (38) of the housing (10) is covered by a flexible locking element (70), which is arranged, at least indirectly, between the reflector (12) and the housing (10).

2. The lighting device in accordance with claim 1, **characterized in that**, with the locking element (70) attached, the receptacle (40) can be fastened on and released from the reflector (12), at least indirectly.

3. The lighting..device in accordance with claim 1 or 2, **characterized in that** the reflector (12) has a neck (20), which surrounds the opening (16) in the latter and protrudes from the rear of the latter towards the opening (38) of the housing (10) and into which the receptacle (40) can be introduced so that it is arranged between the reflector and the housing (10) of the locking element (70).

4. The lighting device in accordance with claim 1 or 2, **characterized in that** a neck (84) is connected with the reflector (12) and surrounds the opening (16) of the latter, into which the receptacle (40) can be inserted, and which is arranged between the reflector and the housing (10) of the locking element (70).

5. The lighting device in accordance with claim 3 or 4, **characterized in that** the neck (20, 84) of the reflector (12) has at least one cutout (22, 90) in its circumference, in which the at least one connecting element (24, 91) is arranged and maintained.

6. The lighting device in accordance with claim 5, **characterized in that** the at least one connecting element (24, 91) is maintained in the at least one cutout (22, 90) in a non- positive and/or positive manner.

7. The lighting device in accordance with one of claims 3 to 6, **characterized in that** the receptacle (40) can be fastened on the neck (20, 84) of the reflector in the manner of a quarter-turn fastening and, in a first representation, can be introduced into the neck (20, 84) in a first rotated position, and can subsequently be rotated into a locked position.

8. The lighting device in accordance with claim 7, **characterized in that** the reflector (12) has a contact surface (76), on which the light source (18) comes to rest in the insertion direction of the receptacle (40) wherein, for making possible the rotation of the receptacle (40) into its locked position, the receptacle (40) can be inserted beyond the insertion path required for the resting of the light source (18) on the contact surface (76), wherein the at least one contact element (54) is shifted in the receptacle (40) and a resilient element (64) arranged in the receptacle (40) is prestressed.

9. The lighting device in accordance with one of claims 3 to 8, **characterized in that** the receptacle (40) has a flange (52) protruding past the exterior circumference of the neck (20, 84) of the reflector (12), and the neck (20, 84) of the reflector (12) has at least one protrusion (78) projecting out of its exterior circumference, and that the locking element (70) is fixed in place on the neck (20, 84) of the reflector (12) between the at least one protrusion (78) of the latter and the flange (52) of the receptacle (40).

10. The lighting device in accordance with one of claims 3 to 9, **characterized in that** an elastic sealing element (53) has been clamped between the receptacle (40) and the neck (20, 84) of the reflector (12).

11. The lighting device in accordance with one of the preceding claims, **characterized in that** the at least one electrical contact element (54) of the receptacle (40) has a plug- in sleeve (55), into which the at least one contact element (42), embodied as a plug, of the light source (18) can be inserted.

12. The lighting device in accordance with one of the preceding claims, **characterized in that** the at least one connecting element (24, 91) has a section (30, 94) embodied in a U-shape, into which a portion, embodied as plug (59, 97), of the at least one contact element (54) of the receptacle (40) can be introduced.

## Revendications

1. Dispositif d'éclairage destiné à des véhicules comportant au moins une source lumineuse (18), qui peut être insérée dans un logement (40), qui peut être fixé sur un élément (12) du dispositif d'éclairage, et qui présente au moins un élément de contact électrique (54), sur lequel au moins un élément de contact électrique (42) de la source lumineuse (18) vient se positionner lors de son insertion dans le logement (40), moyennant quoi le dispositif d'éclairage présente au moins un élément de connexion électrique (24; 91), sur lequel vient se positionner au moins un élément de contact (54) du logement (40) lors de sa fixation, et qui est relié avec un dispositif de connexion (34) disposé sur un boîtier (10) du dispositif d'éclairage par l'intermédiaire d'au moins un dispositif conducteur (32) s'étendant à l'intérieur du boîtier (10), et moyennant quoi le boîtier (10) présente au moins une ouverture (38) permettant d'introduire la source lumineuse (18) et, dans le boîtier (10), est disposé au moins un réflecteur (12) avec une ouverture (16), à travers laquelle peut être introduite la source lumineuse (18), **caractérisé en ce que** le au moins un élément de connexion (24; 91) est disposé au moins de manière indirecte sur le réflecteur (12), **en ce que** le logement (40) peut être fixé au moins de manière indirecte sur le réflecteur (12), **en ce que** le réflecteur (12) est disposé de manière à pouvoir être réglé dans le boîtier (10), et **en ce que** l'ouverture (38) du boîtier (10) est recouverte à l'aide d'un élément de fermeture (70) flexible, disposé au moins de manière indirecte entre le réflecteur (12) et le boîtier (10).

2. Dispositif d'éclairage selon la revendication 1, **caractérisé en ce que**, lorsque l'élément de fermeture (70) est apposé, le logement (40) doit pouvoir être fixé et détaché au moins de manière indirecte sur le réflecteur (12).

3. Dispositif d'éclairage selon la revendication 1 ou 2, **caractérisé en ce que** le réflecteur (12) présente un col (20) entourant son ouverture (16), dépassant de sa face arrière pour rejoindre l'ouverture (38) du boîtier (10), dans lequel peut être introduit le logement (40) et l'élément de fermeture (70) étant disposé entre celui-ci et le boîtier (10).

4. Dispositif d'éclairage selon la revendication 1 ou 2, **caractérisé en ce que**, au réflecteur (12) est relié un col (84) entourant son ouverture (16), dans lequel peut être introduit le logement (40), l'élément de fermeture (70) étant disposé entre celui-ci et le boîtier (10).

5. Dispositif d'éclairage selon la revendication 3 ou 4, **caractérisé en ce que** le col (20; 84) du réflecteur (12) présente au moins un évidement (22; 90) sur sa circonférence, dans lequel est disposé et maintenu le au moins un élément de connexion (24; 91).

6. Dispositif d'éclairage selon la revendication 5, **caractérisé en ce que** le au moins un élément de connexion (24; 91) est maintenu par ajustement serré et/ou par conjugaison de forme dans au moins un évidement (22; 90).

7. Dispositif d'éclairage selon au moins l'une quelconque des revendications 3 à 6, **caractérisé en ce que** le logement (40) peut être fixé par une fermeture de type à baïonnette sur un col (20; 84) du réflecteur (12) et ainsi être introduit dans le col (20; 84) dans une première position de rotation, puis peut tourner pour parvenir dans la position de verrouillage.

8. Dispositif d'éclairage selon la revendication 7, **caractérisé en ce que** le réflecteur (12) présente une surface d'appui (76), sur laquelle vient se positionner la source lumineuse (18) dans le sens d'introduction du logement (40), moyennant quoi, afin de permettre la rotation du logement (40) pour qu'il parvienne dans sa position de verrouillage, le logement (40) peut être inséré au-delà de la trajectoire d'introduction, qui est nécessaire afin de positionner la source lumineuse (18) sur la surface d'appui (76), moyennant quoi le au moins un élément de contact (54) est déplacé dans le logement (40) et un élément (64) élastique disposé dans le logement (40) est précontraint.

9. Dispositif d'éclairage selon l'une quelconque des revendications 3 à 8, **caractérisé en ce que** le logement (40) présente une bride (52) faisant saillie par rapport à la circonférence externe du col (20 ; 84) du réflecteur (12), et le col (20 ; 84) du réflecteur (12) présente au moins une saillie (78) dépassant de sa circonférence externe, et **en ce que** l'élément de fermeture (78) est fixé sur le col (20 ; 84) du réflecteur (12) entre son au moins un bec (78) et la bride (52) du logement (40).

10. Dispositif d'éclairage selon l'une quelconque des revendications 3 à 9, **caractérisé en ce que**, entre le logement (40) et le col (20 ; 84) du réflecteur (12), est serré un élément d'étanchéité (53) élastique.

11. Dispositif d'éclairage selon au moins l'une quelconque des revendications précédentes, **caractérisé en ce que** au moins un élément de contact électrique (54) du logement (40) présente une prise femelle, dans laquelle peut être introduit le au moins un élément de contact (42) de la source lumineuse (18) configuré sous la forme d'une broche d'enfichage.

12. Dispositif d'éclairage selon l'une quelconque des revendications précédentes, **caractérisé en ce que** le au moins un élément de connexion (24 ; 91) présente une section (30 ; 94) configurée en forme de U, dans laquelle peut être introduit un élément configuré sous la forme d'une broche d'enfichage (59 ; 97) du au moins un élément de contact (54) du logement (40).
